# EUROPEAN PATENT APPLICATION

(11) **EP 4 494 768 A1**
(43) Date of publication of application: **22.01.2025**
(21) Application number: 24185464.5
(22) Date of filing: 28.06.2024
(51) Int. Cl.: B05C 5/02, B05C 13/00

(54) **COATING DEVICE FOR ELECTRODE SUBSTRATE OF RECHARGEABLE BATTERY**

(30) Priority: 20.07.2023 KR 20230094886
(71) Applicant: Samsung SDI Co., Ltd., Yongin-si, Gyeonggi-do 17084 (KR)
(72) Inventor: Kim, Bumrae, Yongin-si, Gyeonggi-do 17084 (KR); Kim, Dahyun, Yongin-si, Gyeonggi-do 17084 (KR); Lee, Byonggon, Yongin-si, Gyeonggi-do 17084 (KR)
(74) Representative: Gulde & Partner

(57) **Abstract**

A coating device for an electrode substrate of a rechargeable battery includes: a roll that continuously supplies an electrode substrate; and a slot die that forms an active material coating portion at the electrode substrate. The roll and the slot die form a first gap between each other at a center of a width direction of the electrode substrate, and form a second gap that is greater than the first gap.

## Description

### BACKGROUND OF THE INVENTION

### (a) Field of the Invention

The present disclosure relates to a coating device for an electrode substrate of a rechargeable battery that coats an active material slurry on the electrode substrate of the rechargeable battery.

### (b) Description of the Related Art

A rechargeable battery is a battery that repeatedly performs charging and discharging, unlike a primary battery. A small-capacity rechargeable battery may be used in a portable small electronic device such as a mobile phone, a laptop computer, or a camcorder, and a large-capacity rechargeable battery may be used as a power source for driving a motor of a hybrid vehicle or an electric vehicle.

For example, the rechargeable battery includes an electrode assembly that performs charging and discharging, a packaging (e.g., a pouch or a can) that accommodates the electrode assembly, and an electrode terminal electrically connected to the electrode assembly to draw the electrode assembly out to the outside of the pouch. The electrode assembly includes a winding type in which a negative electrode plate and a positive electrode plate are wound on both sides of a separator interposed therebetween, and a stacking type in which a negative electrode plate and a positive electrode plate are stacked on both sides of a separator interposed therebetween.

An electrode plate process for manufacturing an electrode plate includes a mixing step of mixing an active material slurry, a coating step of applying a coating portion of the active material slurry to an electrode substrate, a pressing step of compressing the coating portion of the active material slurry, and a slitting step of cutting the electrode substrate according to heat of the coating portion.

Positive and negative electrode plates manufactured by the electrode plate process operate by facing each other. In this case, a ratio of the positive electrode to the negative electrode in the rechargeable battery is very important to ensure safety. A capacity of the negative electrode should always be larger than that of the positive electrode. In other words, an operation is possible without a side reaction if there has to be room for a lithium ion to be inserted into a negative electrode active material.

However, according to a general slot die coating method, an amount of a coating on an edge portion is small. Lack of the coating amount may increase resistance by increasing a face-to-face distance between the positive electrode and the negative electrode, and safety may be deteriorated due to a phenomenon (that is, a reversal phenomenon) caused by an imbalance in a face-to-face capacity. In other words, it is desirable to have a shape for maintaining the face-to-face distance and a uniform amount of an active material across all regions.

To overcome this, an amount of flow is controlled through rheology control and a change in a shape of a spacer inside a slot die. However, there is a difference between a sliding shape of the coating edge portion and the amount of the active material.

### SUMMARY OF THE INVENTION

Embodiments of the present disclosure are to provide a coating device for an electrode substrate of a rechargeable battery that minimizes a difference in an application amount of an active material between a coating central portion and a coating edge portion by controlling a shape of the coating edge portion and the application amount of the active material.

Other embodiments of the present disclosure are to provide a coating device for an electrode substrate of a rechargeable battery that ensures a safe face-to-face ratio between a positive electrode and a negative electrode and maintains a constant face-to-face distance by controlling a shape of a coating edge portion and an application amount of an active material.

A coating device for an electrode substrate of a rechargeable battery according to embodiments of the present disclosure includes: a roll that continuously supplies an electrode substrate; and a slot die that forms an active material coating portion at the electrode substrate. The roll and the slot die form a first gap between each other at a center of a width direction of the electrode substrate, and form a second gap greater than the first gap at both ends of the width direction.

The slot die may include a first block, a second block, the first block may include a chamber configured to temporarily store active material slurry, the first and second blocks coupled to each other may form a rip for discharging the active material slurry. The active material slurry is for forming positive and negative electrodes of the battery.

The first gap may be set between a rip of the slot die and the electrode substrate progressing on the roll.

The roll may include a non-corresponding portion longer than the slot die, and the non-corresponding portion corresponding to both ends of the rip of the slot die may include a small diameter portion.

The second gap may be set between an end portion of the rip of the slot die and the small diameter portion of the roll.

The small diameter portion may include: a truncated circular cone surface that is inclined away from an end portion of the rip of the slot die; and a cylindrical face that is connected to the truncated circular cone surface in an axial direction of the roll.

The small diameter portion may include: a truncated circular cone surface formed as a convex curved surface that inclines smoothly while moving away from an end portion of the rip of the slot die and then rapidly inclines; and a cylindrical surface connected to the truncated circular cone surface in an axial direction of the roll.

The small diameter portion may include: a truncated circular cone surface formed as a concave curved surface that inclines rapidly while moving away from an end portion of the rip of the slot die and then smoothly inclines; and a cylindrical surface connected to the truncated circular cone surface in an axial direction of the roll.

The roll may include a non-corresponding portion longer than the slot die, and both ends of the rip of the slot die may include an expansion rip corresponding to the roll adjacent to the non-corresponding portion.

The second gap may be set between the expansion rip provided at the both ends of the rip of the slot die and the roll adjacent to the non-corresponding portion.

The expansion rip may include: an inclined portion that is inclined while moving away from the roll; and a planar portion that is connected to the inclined portion in an axial direction of the roll.

The expansion rip may include: an inclined portion formed as a convex curved surface that inclines smoothly while moving away from the roll and then rapidly inclines; and a planar portion connected to the inclined portion in an axial direction of the roll.

The expansion rip may include: an inclined portion formed as a concave curved surface that inclines rapidly while moving away from the roll and then smoothly inclines; and a planar portion connected to the inclined portion in an axial direction of the roll.

The embodiments may form a gap between a roll and a slot die as a first gap at a center of a width direction of an electrode substrate and may form a second gap larger than the first gap at both ends of the width direction, so that a shape of a coating edge portion and an application amount of an active material are controlled. Therefore, the embodiments may minimize a difference in the application amount of the active material between a coating central portion and the coating edge portion.

The embodiments may form the center of the width direction of the electrode substrate as the first gap and may form the both ends of the width direction as the second gap larger than the first gap to control the shape of the coating edge portion and the application amount of the active material, so that the embodiments ensure a safe face-to-face ratio between a positive electrode and a negative electrode and maintains a constant face-to-face distance.

### BRIEF DESCRIPTION OF THE DRAWINGS

FIG. 1 is a cross-sectional view of a coating device for an electrode substrate of a rechargeable battery according to a first embodiment of the present disclosure.
FIG. 2 is a plan view of applying an active material to an electrode substrate supplied by a roll of FIG. 1 using a slot die, a cross-sectional view of a shape of the applied active material coating portion, and a cross-sectional view of a portion where a negative electrode and a positive electrode face each other.
FIG. 3 is a state diagram of forming a first gap and a second gap with a roll and a slot die in a coating device for an electrode substrate of a rechargeable battery according to a second embodiment of the present disclosure.
FIG. 4 is a state diagram of forming a first gap and a second gap with a roll and a slot die in a coating device for an electrode substrate of a rechargeable battery according to a third embodiment of the present disclosure.
FIG. 5 is a plan view of applying an active material to an electrode substrate supplied by a roll with a slot die in a coating device for an electrode substrate of a rechargeable battery according to a fourth embodiment of the present disclosure.
FIG. 6 is a state diagram of forming a first gap and a second gap with a roll and a slot die in a coating device for an electrode substrate of a rechargeable battery according to a fifth embodiment of the present disclosure.
FIG. 7 is a state diagram of forming a first gap and a second gap with a roll and a slot die in a coating device for an electrode substrate of a rechargeable battery according to a sixth embodiment of the present disclosure.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

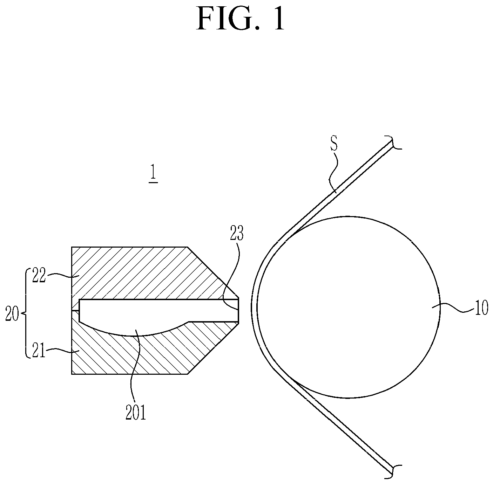

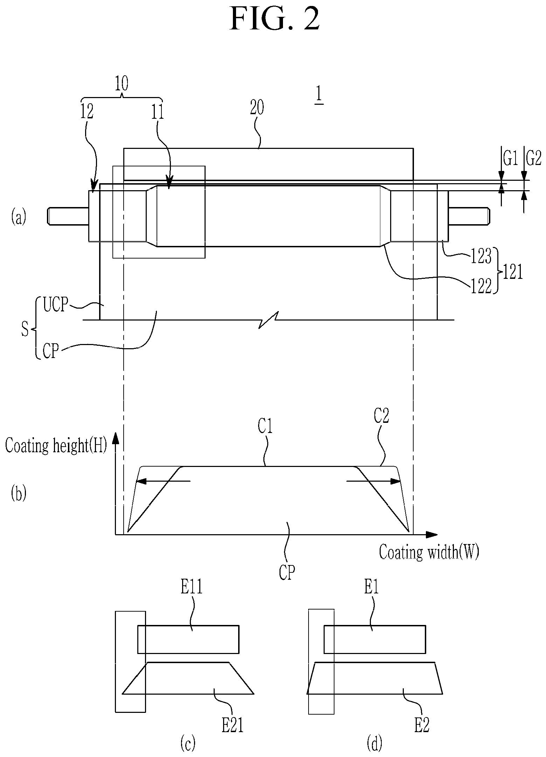

FIG. 1 is a cross-sectional view of a coating device for an electrode substrate of a rechargeable battery according to a first embodiment of the present disclosure, and FIG. 2 is a plan view (a) of applying an active material to an electrode substrate supplied by a roll of FIG. 1 using a slot die, a cross-sectional view (b) of a shape of the applied active material coating portion, and a cross-sectional view (c or d) of a portion where a negative electrode and a positive electrode face each other.

Referring to FIG. 1 and FIG. 2, the coating device 1 for the electrode substrate of the rechargeable battery of the first embodiment may include a roll 10 that continuously supplies the electrode substrate S, and a slot die 20 that forms an active material coating portion CP at the electrode substrate S. The roll 10 may move the electrode substrate S toward the slot die 20 to coat an active material while rotating, and then may move away from the slot die 20.

For example, the slot die 20 may include a first block 21, a second block 22, and a shim member (not shown) installed between the first block 21 and the second block 22. The first block 21, the second block 22, and the shim member installed between the first block 21 and the second block 22 may be fastened with a fastening member (not shown) to form the slot die for coating an active material slurry.

The first block 21 may include a chamber 201 that temporarily stores the supplied active material slurry to uniformly supply the stored active material slurry in a width direction. A supply portion (or a supply unit) may be connected to a lower portion of the first block 21 to supply the active material slurry to the chamber 201. The first and second blocks 21 and 22 coupled to each other may form a rip 23 for discharging the active material slurry.

The slot die 20 may temporarily accommodate the active material slurry supplied through the supply portion in the chamber 201 to discharge the accommodated active material slurry through the rip 23, so that the slot die 20 applies the active material slurry to the electrode substrate S advancing forward of the rip 23 in a uniform amount in the width direction. Therefore, the coated portion CP to which the active material slurry is applied and an uncoated portion UCP at both sides of the coated portion CP where the active material slurry is not applied and the electrode substrate S is exposed are formed at the electrode substrate S.

Based on a width direction of the electrode substrate S, in the coated portion CP, a coating central portion C1 may be formed at a center of the width direction, and a coating edge portion C2 may be formed at both ends of the width direction that are both sides of the coating central portion C1.

The first embodiment may control a shape of the coating edge portion C2 and an application amount of the coating edge portion C2 to reduce a difference in the application amount between the coating central portion C1 and the coating edge portion C2, so that stability of the battery is ensured by making a face-to-face distance between the positive electrode and the negative electrode uniform.

To this end, the roll 10 and the slot die 20 may form a first gap G1 between the roll 10 and the slot die 20 in a moving direction of the electrode substrate S at a center of the width direction (an x-axis direction) of the electrode substrate S, and may form a second gap G2 that is larger than the first gap G1 at both ends of the width direction. Substantially, the first gap G1 and the second gap G2 may be set between the rip 23 of the slot die 20 and the electrode substrate S progressing on the roll 10.

The first and second gaps G1 and G2 may allow the application amount of the active material to be constant if the active material slurry of each of the positive and negative electrodes is coated on the electrode substrate S. That is, the first gap G1 may relatively keep the application amount and a coating height (H) constant in the coating central portion C1, and the second gap G2 may make the application amount of the coating edge portion C2 the same level as that of the coating central portion C1.

Therefore, the application amount and the coating height (H) of the active material slurry may be uniform in a region where the positive electrode E1 and the negative electrode E2 face each other. That is, the application amount and the coating height (H) of the active material slurry in the region where the positive electrode E1 and the negative electrode E2 face each other of the first embodiment (d) may be more uniform than the application amount and the coating height (H) of the active material slurry in a region where a positive electrode E11 and a negative electrode E21 face each other of the prior art (c), so that the stability of the battery is secured.

Referring to FIG. 2, for example, the roll 10 may include a corresponding portion 11 corresponding to the slot die 20 and a non-corresponding portion 12 that is formed longer than the slot die 20 not to correspond to the slot die 20.

In the corresponding portion 11, the slot die 20 and the roll 10 may form the first gap G1 between each other. For example, in the corresponding portion 11, the rip 23 of the slot die 20 and the electrode substrate S may form the first gap G1 between each other. The first gap G1 may form the coating central portion C1 by making the application amount of the active material slurry constant in the corresponding portion 11.

The non-corresponding portion 12 of the roll 10 may include a small diameter portion 121 having a diameter smaller than a diameter of the corresponding portion 11. The small diameter portion 121 may be formed at the non-corresponding portion 12 corresponding to both ends of the rip 23 of the slot die 20. That is, the small diameter portion 121 may start from a connection portion between the corresponding portion 11 and the non-corresponding portion 12 to be formed throughout the non-corresponding portion 12.

As an example, the small diameter portion 121 may include a truncated circular cone surface 122 that is inclined away from an end portion of the rip 23 of the slot die 20, and a cylindrical surface 123 that is connected to the truncated circular cone surface 122 in an axial direction of the roll 10.

In the non-corresponding portion 12, the slot die 20 and the roll 10 may form the second gap G2 between each other. For example, in the small diameter portion 121 of the non-corresponding portion 12, the rip 23 of the slot die 20 and the electrode substrate S may form the second gap G2 between each other. The second gap G2 may form the coating edge portion C2 by increasing the application amount of the active material slurry in the non-corresponding portion 12 compared with that in the coating central portion C1.

The truncated circular cone surface 122 in the small diameter portion 121 may gradually increase the first gap G1 to the second gap G2 to prevent a rapid increase in the application amount on the cylindrical surface 123. Therefore, the truncated circular cone surface 122 connecting the corresponding portion 11 and the cylindrical surface 123 may enable a gradual increase in the application amount in each of the coating central portion C1 and the coating edge portion C2.

Due to the first and second gaps G1 and G2 formed by the truncated circular cone surface 122 and the cylindrical surface 123 of the small diameter portion 121, the application amount of the active material slurry in the coating edge portion C2 may be increased compared with that in the coating central portion C1.

The coating central portion C1 and the coating edge portion C2 may form the same level of application amount and the same coating height (H). That is, the application amount and the coating height (H) of the active material slurry may be uniform in the region where the positive electrode E1 and the negative electrode E2 face each other.

Therefore, if the electrode substrate S of the first embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

Hereinafter, various embodiments of the present disclosure will be described. A description of a configuration that is the same as the first embodiment and the previously described embodiment will be omitted, and a description of a configuration that is different from them will be described.

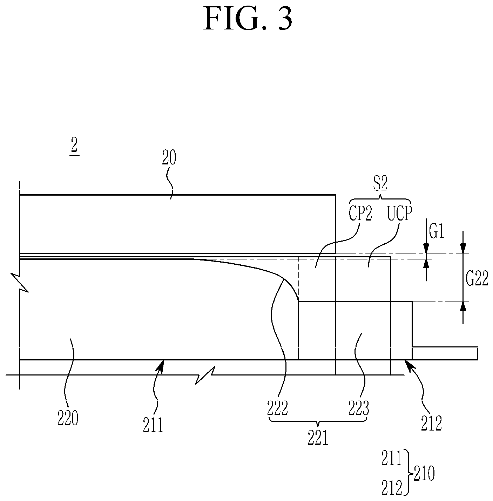

FIG. 3 is a state diagram of forming a first gap and a second gap with a roll and a slot die in a coating device for an electrode substrate of a rechargeable battery according to a second embodiment of the present disclosure. Referring to FIG. 3, in the coating device 2 of the second embodiment, a small diameter portion 221 may include a truncated circular cone surface 222 with a convex curved surface that inclines smoothly while moving away from an end portion of the rip 23 of the slot die 20 and then rapidly inclines, and a cylindrical surface 223 connected to the truncated circular cone surface 222 in an axial direction of the roll 210.

In a non-corresponding portion 212, the slot die 20 and the roll 210 may form a second gap G22 between each other. For example, in the small diameter portion 221 of the non-corresponding portion 212, the rip 23 of the slot die 20 and the electrode substrate S2 may form the second gap G22 between each other. The second gap G22 may form the coating edge portion C2 of FIG. 2 by increasing the application amount of the active material slurry in the non-corresponding portion 212 compared with that in the coating central portion C1 of FIG. 2.

The truncated circular cone surface 222 in the small diameter portion 221 may gently increase the first gap G1 toward the second gap G22 and then may rapidly increase the first gap G1 to the second gap G22 to prevent a rapid increase in the application amount on the cylindrical surface 223. Therefore, the truncated circular cone surface 222 connecting a corresponding portion 211 and the cylindrical surface 223 may enable a gradual increase in the application amount in each of the coating central portion C1 and the coating edge portion C2.

Due to the first and second gaps G1 and G22 formed by the truncated circular cone surface 222 and the cylindrical surface 223 of the small diameter portion 221, the application amount of the active material slurry in the coating edge portion C2 may be increased than that in the coating central portion C1.

The coating central portion C1 and the coating edge portion C2 may form the same level of application amount and the same coating height (H). That is, the application amount and the coating height (H) of the active material slurry may be uniform in the region where the positive electrode E1 and the negative electrode E2 face each other.

Therefore, if the electrode substrate S2 of the second embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

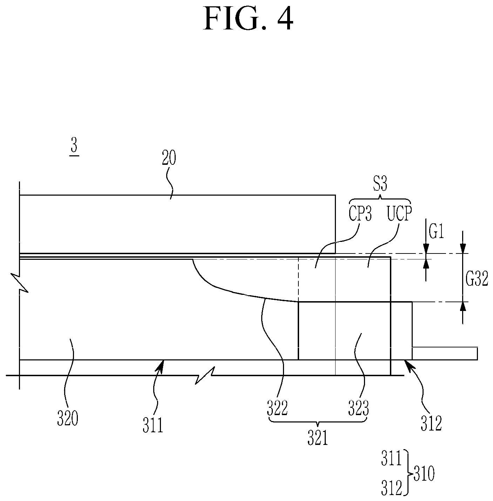

FIG. 4 is a state diagram of forming a first gap and a second gap with a roll and a slot die in a coating device for an electrode substrate of a rechargeable battery according to a third embodiment of the present disclosure. Referring to FIG. 4, in the coating device 3 of the third embodiment, a small diameter portion 321 may include a truncated circular cone surface 322 with a concave curved surface that inclines rapidly while moving away from an end portion of the rip 23 of the slot die 20 and then smoothly inclines, and a cylindrical surface 323 connected to the truncated circular cone surface 322 in an axial direction of the roll 310.

In a non-corresponding portion 312, the slot die 20 and the roll 310 may form a second gap G32 between each other. For example, in the small diameter portion 321 of the non-corresponding portion 312, the rip 23 of the slot die 20 and the electrode substrate S3 may form the second gap G32 between each other. The second gap G32 may form the coating edge portion C2 of FIG. 2 by increasing the application amount of the active material slurry in the non-corresponding portion 312 compared with that in the coating central portion C1 of FIG. 2.

The truncated circular cone surface 322 in the small diameter portion 321 may rapidly increase the first gap G1 toward the second gap G32 and then may gently increase the first gap G1 to the second gap G32 to prevent a rapid increase in the application amount on the cylindrical surface 323. Therefore, the truncated circular cone surface 322 connecting a corresponding portion 311 and the cylinder surface 323 may enable a gradual increase in the application amount in each of the coating central portion C1 and the coating edge portion C2.

Due to the first and second gaps G1 and G32 formed by the truncated circular cone surface 322 and the cylindrical surface 323 of the small diameter portion 321, the application amount of the active material slurry in the coating edge portion C2 may be increased than that in the coating central portion C1.

The coating central portion C1 and the coating edge portion C2 may form the same level of application amount and the same coating height (H). That is, the application amount and the coating height (H) of the active material slurry may be uniform in the region where the positive electrode E1 and the negative electrode E2 face each other.

Therefore, if the electrode substrate S3 of the third embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

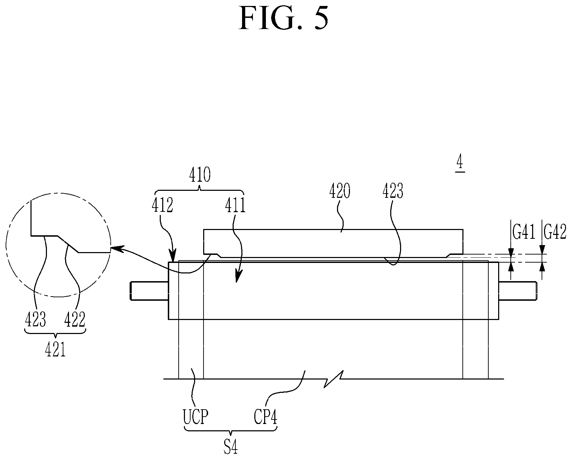

FIG. 5 is a plan view of applying an active material to an electrode substrate supplied by a roll with a slot die in a coating device for an electrode substrate of a rechargeable battery according to a fourth embodiment of the present disclosure. Referring to FIG. 5, in the coating device 4 of the fourth embodiment, the roll 410 may include a corresponding portion 411 corresponding to the slot die 420 and a non-corresponding portion 412 that is formed longer than the slot die 420 not to correspond to the slot die 420.

In the corresponding portion 411, the slot die 420 and the roll 410 may form a first gap G41 between each other. For example, in the corresponding portion 411, a rip 403 of the slot die 420 and the electrode substrate S4 may form the first gap G41 between each other. The first gap G41 may form the coating central portion C1 of FIG. 2 by making the application amount of the active material slurry constant in the corresponding portion 411.

Both ends of the rip 403 of the slot die 420 may include an expansion rip 421 corresponding to the roll 410 adjacent to the non-corresponding portion 412. The expansion rip 421 may start from a connection portion between the corresponding portion 411 and the non-corresponding portion 412 to be formed at a portion of the corresponding portion 411.

A second gap G42 may be set between the expansion rip 421 provided at the both ends of the rip 403 of the slot die 420 and the corresponding portion 411 of the roll 410 adjacent to the non-corresponding portion 412. The second gap G42 may form the coating edge portion C2 by increasing the application amount of the active material slurry at both ends of the corresponding portion 411 adjacent to the non-corresponding portion 412 compared with that in the coating central portion C1.

As an example, the expansion rip 421 may include an inclined portion 422 that is inclined while moving away from the roll 410, and a planar portion 423 that is connected to the inclined portion 422 in an axial direction of the roll 410. The inclined portion 422 in the expansion rip 421 may gradually increase the first gap G41 to the second gap G42 to prevent a rapid increase in the application amount in the planar portion 423. Therefore, the inclined portion 422 connecting the corresponding portion 411 and the planar portion 423 may enable a gradual increase in the application amount in each of the coating central portion C1 and the coating edge portion C2.

Due to the first and second gaps G41 and G42 formed by the inclined portion 422 and the planar portion 423 of the expansion rip 421, the application amount of the active material slurry in the coating edge portion C2 may be increased compared with that in the coating central portion C1.

The coating central portion C1 and the coating edge portion C2 may form the same level of application amount and the same coating height (H) (see FIG. 2). That is, the application amount and the coating height (H) of the active material slurry may be uniform in the region where the positive electrode E1 and the negative electrode E2 face each other.

Therefore, if the electrode substrate S4 of the fourth embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

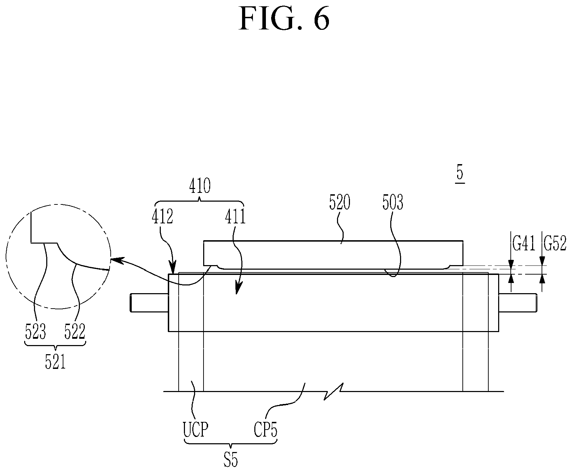

FIG. 6 is a state diagram of forming a first gap and a second gap with a roll and a slot die in a coating device for an electrode substrate of a rechargeable battery according to a fifth embodiment of the present disclosure. Referring to FIG. 6, in the coating device 5 of the fifth embodiment, the roll 410 may include the corresponding portion 411 corresponding to the slot die 520 and the non-corresponding portion 412 that is formed longer than the slot die 520 not to correspond to the slot die 520.

In the corresponding portion 411, the slot die 520 and the roll 410 may form the first gap G41 between each other. For example, in the corresponding portion 411, a rip 503 of the slot die 520 and the electrode substrate S5 may form the first gap G41 between each other. The first gap G41 may form the coating central portion C1 of FIG. 2 by making the application amount of the active material slurry constant in the corresponding portion 411.

Both ends of the rip 503 of the slot die 520 may include an expansion rip 521 corresponding to the roll 410 adjacent to the non-corresponding portion 412. The expansion rip 521 may start from a connection portion between the corresponding portion 411 and the non-corresponding portion 412 to be formed at a portion of the corresponding portion 411.

A second gap G52 may be set between the expansion rip 521 provided at the both ends of the rip 503 of the slot die 520 and the corresponding portion 411 of the roll 410 adjacent to the non-corresponding portion 412. The second gap G52 may form the coating edge portion C2 by increasing the application amount of the active material slurry at both ends of the corresponding portion 411 adjacent to the non-corresponding portion 412 compared with that in the coating central portion C1.

As an example, the expansion rip 521 may include an inclined portion 522 formed as a convex curved surface that inclines smoothly while moving away from the roll 410 and then rapidly inclines, and a planar portion 523 connected to the inclined portion 522 in the axial direction of the roll 410. The inclined portion 522 in the expansion rip 521 may gradually increase the first gap G41 to the second gap G52 to prevent a rapid increase in the application amount in the planar portion 523. Accordingly, the inclined portion 522 connecting the corresponding portion 411 and the planar portion 523 may enable a gradual increase in the application amount in each of the coating central portion C1 and the coating edge portion C2.

Due to the first and second gaps G41 and G52 formed by the inclined portion 522 and the planar portion 523 of the expansion rip 521, the application amount of the active material slurry in the coating edge portion C2 may be increased compared with that in the coating central portion C1.

The coating central portion C1 and the coating edge portion C2 may form the same level of application amount and the same coating height (H) (see FIG. 2). That is, the application amount and the coating height (H) of the active material slurry may be uniform in the region where the positive electrode E1 and the negative electrode E2 face each other.

Therefore, if the electrode substrate S5 of the fifth embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

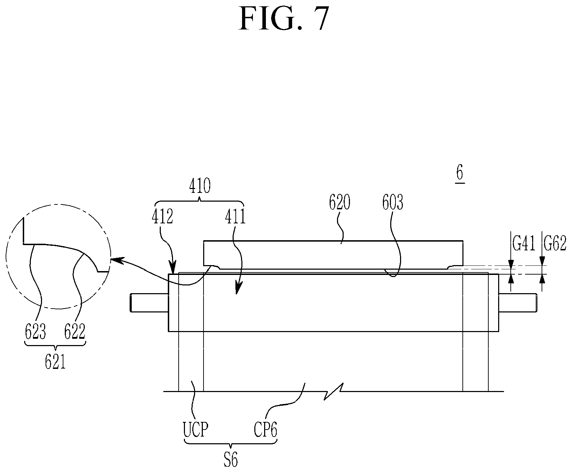

FIG. 7 is a state diagram of forming a first gap and a second gap with a roll and a slot die in a coating device for an electrode substrate of a rechargeable battery according to a sixth embodiment of the present disclosure. Referring to FIG. 7, in the coating device 6 of the sixth embodiment, the roll 410 may include the corresponding portion 411 corresponding to the slot die 620 and the non-corresponding portion 412 that is formed longer than the slot die 620 not to correspond to the slot die 620.

In the corresponding portion 411, the slot die 620 and the roll 410 may form the first gap G41 between each other. For example, in the corresponding portion 411, a rip 603 of the slot die 620 and the electrode substrate S6 may form the first gap G41 between each other. The first gap G41 may form the coating central portion C1 of FIG. 2 by making the application amount of the active material slurry constant in the corresponding portion 411.

Both ends of the rip 603 of the slot die 620 may include an expansion rip 621 corresponding to the roll 410 adjacent to the non-corresponding portion 412. The expansion rip 621 may start from a connection portion between the corresponding portion 411 and the non-corresponding portion 412 to be formed at a portion of the corresponding portion 411.

A second gap G62 may be set between the expansion rip 621 provided at the both ends of the rip 603 of the slot die 620 and the corresponding portion 411 of the roll 410 adjacent to the non-corresponding portion 412. The second gap G62 may form the coating edge portion C2 by increasing the application amount of the active material slurry at both ends of the corresponding portion 411 adjacent to the non-corresponding portion 412 compared with that in the coating central portion C1.

As an example, the expansion rip 621 may include an inclined portion 622 formed as a convex curved surface that inclines smoothly while moving away from the roll 410 and then rapidly inclines, and a planar portion 623 connected to the inclined portion 622 in the axial direction of the roll 410. The inclined portion 622 in the expansion rip 621 may gradually increase the first gap G41 to the second gap G62 to prevent a rapid increase in the application amount in the planar portion 623. Accordingly, the inclined portion 622 connecting the corresponding portion 411 and the planar portion 623 may enable a gradual increase in the application amount in each of the coating central portion C1 and the coating edge portion C2.

Due to the first and second gaps G41 and G62 formed by the inclined portion 622 and the planar portion 623 of the expansion rip 621, the application amount of the active material slurry in the coating edge portion C2 may be increased compared with that in the coating central portion C1.

The coating central portion C1 and the coating edge portion C2 may form the same level of application amount and the same coating height (H) (see FIG. 2). That is, the application amount and the coating height (H) of the active material slurry may be uniform in the region where the positive electrode E1 and the negative electrode E2 face each other.

Therefore, if the electrode substrate S6 of the sixth embodiment is used, a face-to-face distance and a face-to-face capacity between the positive and negative electrodes in the rechargeable battery may be constantly ensured. For this reason, resistance may be reduced at the portion where the negative electrode and the positive electrode face each other, and safety may be ensured.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

| | | | |
|---|---|---|---|
| 1, 2, 3, 4, 5, 6: | coating device | 10, 210, 310, 410: | roll |
| 11, 211: | corresponding portion | | |
| 12, 212: | non-corresponding portion | | |
| 20: | slot die | 21: | first block |
| 22: | second block | 23, 423: | rip |
| 121, 221, 321: | small diameter portion | | |
| 122, 222, 322: | truncated circular cone | | surface |
| 123, 223, 323: | cylindrical surface | 201: | chamber |
| 403, 503, 603: | rip | 410: | roll |
| 411: | corresponding portion | 412: | non-corresponding portion |
| 420: | slot die | 421: | expansion rip |
| 422: | inclined portion | 423: | planar portion |
| 520: | slot die | 521: | expansion rip |
| 522: | inclined portion | 523: | planar portion |
| 620: | slot die | 621: | expansion rip |
| 622: | inclined portion | 623: | planar portion |
| C1: | coating central portion | C2: | coating edge portion |
| CP, CP2, CP3: | coated portion | CP4: | coated portion |
| CP5: | coated portion | CP6: | coated portion |
| G1: | first gap | G2, G22, G32: | second gap |
| G41: | first gap | G42: | second gap |
| G52: | second gap | G62: | second gap |
| H: | coating height | S, S2, S3, S4, S5, S6: | electrode substrate |
| UCP: | uncoated portion | W: | coating width |

## Claims

1. A slot die coating device (1, 2, 3, 4, 5, 6), comprising
a roll (10, 210, 310, 410) configured to continuously supply an electrode substrate (S, S2, S3, S4, S5, S6); and
a slot die (20, 420, 520, 620) that forms an active material coating portion on the electrode substrate, wherein the roll (10, 210, 310, 410) and the slot die (20, 420, 520, 620) form a first gap between each other at a center of a width direction of the electrode substrate and form a second gap that is greater than the first gap.

2. The slot die coating device (1, 2, 3, 4, 5, 6) as claimed in claim 1, wherein the slot die (20, 420, 520, 620) includes a rip (23, 403, 503, 603), and
the first gap is formed between the rip (23, 403, 503, 603) and the electrode substrate on the roll (10, 210, 310, 410).

3. The slot die coating device (1, 2, 3, 4, 5, 6) as claimed in claim 1 or 2, wherein the roll (10, 210, 310, 410) includes a non-corresponding portion (12, 212, 312, 412) extending beyond the slot die (20, 420, 520, 620), and
the non-corresponding portion (12, 212, 312, 412) corresponding to both ends of the rip ( 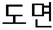 ) (23, 403, 503, 603) of the slot die (20, 420, 520, 620) includes a small diameter portion (121, 221, 321).

4. The slot die coating device (1, 2, 3, 4, 5, 6) as claimed in any of the preceding claims,
wherein the second gap is formed between an end portion of the rip (23, 403, 503, 603) of the slot die and the small diameter portion (121, 221, 321) of the roll (10, 210, 310, 410).

5. The slot die coating device (1) as claimed in claim 3 or 4, wherein the small diameter portion (121) comprises:
a truncated circular cone surface (122) that is inclined away from an end portion of the rip (23) of the slot die (20); and
a cylindrical face that is connected to the truncated circular cone surface (122) in an axial direction of the roll (10).

6. The slot die coating device (1,5) as claimed in claim 3 or 4, wherein the small diameter portion (221, 521) comprises:
a truncated circular cone surface (222, 522) formed as a convex curved surface that inclines smoothly while moving away from an end portion of the rip (23,503) of the slot die (20,420) and then rapidly inclines; and
a cylindrical surface (223) connected to the truncated circular cone surface (222) in an axial direction of the roll (210, 410).

7. The slot die coating device (3) as claimed in claim 3 or 4, wherein the small diameter portion (321) comprises:
a truncated circular cone surface (322) formed as a concave curved surface that inclines rapidly while moving away from an end portion of the rip (23) of the slot die (20) and then smoothly inclines; and
a cylindrical surface (323) connected to the truncated circular cone surface (322) in an axial direction of the roll (310).

8. The slot die coating device (4, 5, 6) as claimed in claim 2, wherein the roll (410) includes a non-corresponding portion (412) extending beyond the slot die (420, 520, 620), and
both ends of the rip (403, 503, 603) of the slot die (420, 520, 620) includes an expansion rip (421, 521, 621) corresponding to the roll (410) adjacent to the non-corresponding portion (412).

9. The slot die coating device (4, 5, 6) as claimed in claim 8, wherein the second gap is set between the expansion rip (421, 521, 621) provided at the both ends of the rip (403) of the slot die (420) and the roll (410) adjacent to the non-corresponding portion (412).

10. The slot die coating device (4) as claimed in claim 8 or 9, wherein the expansion rip (421) comprises:
an inclined portion (422) that is inclined while moving away from the roll (10, 410); and
a planar portion (423) that is connected to the inclined portion (422) in an axial direction of the roll (410).

11. The slot die coating device (5) as claimed in claim 8 or 9, wherein the expansion rip (521) comprises:
an inclined portion (522) formed as a convex curved surface that inclines smoothly while moving away from the roll (410) and then rapidly inclines; and
a planar portion (523) connected to the inclined portion (522) in an axial direction of the roll (410).

12. The slot die coating device (6) as claimed in claim 8 or 9, wherein the expansion rip (621) comprises:
an inclined portion (622) formed as a concave curved surface that inclines rapidly while moving away from the roll (410) and then smoothly inclines; and
a planar portion (623) connected to the inclined portion (622) in an axial direction of the roll (410).
